# EUROPEAN PATENT SPECIFICATION

(11) **EP 4 357 062 B1**
(45) Date of publication and mention of the grant of the patent: **12.11.2025**
(21) Application number: 22936045.8
(22) Date of filing: 01.09.2022
(51) Int. Cl.: B23K 11/30, B23K 11/11, B23K 11/18, B23K 103/10, B24C 1/02, B24C 3/32

(54) **METHOD FOR CUTTING AND RESHAPING AN ELECTRODE TIP**
VERFAHREN ZUM SCHNEIDEN UND UMFORMEN EINER ELEKTRODENSPITZE
PROCÉDÉ DE COUPE ET DRESSSAGE D'UNE POINTE D'ÉLECTRODE

(43) Date of publication of application: 24.04.2024
(73) Proprietor: Kyokutoh Co., Ltd., Orido-cho, Nissin-shi Aichi 4700115 (JP)
(72) Inventor: TEZAWA, Kazuhiro, Nissin-shi, Aichi 470-0115 (JP)
(74) Representative: Petraz, Gilberto Luigi
(86) International application number: PCT/JP2022/033018
(87) International publication number: WO 2024/047849

(56) References cited:
- EP-A1- 2 402 110
- WO-A1-2019/203105
- CN-A- 103 658 958
- JP-A- 2022 501 196
- JP-A- H09 239 562
- US-A1- 2005 211 677
- US-A1- 2021 046 552
- US-B2- 8 436 269

## Description

### BACKGROUND OF INVENTION

### Field of the Invention

The present invention relates to a method for cutting and reshaping the tip end of an electrode tip for aluminum welding.

### Background Art

In spot-welding of an aluminum part, an oxide film that forms during welding is known to increase the electric resistance in an area of contact between the tip end of an electrode tip and the aluminum part and destabilize the welding. In response to this, the tip end of the electrode tip may typically have a rough surface with protrusions that can break an oxide film during welding and reduce the electric resistance in the area of contact to stabilize the welding.

For example, Patent Literature 1 describes a technique for treating the tip end of an electrode tip by blasting to form a rough surface area at the tip end of the electrode tip. Such document fails to disclose a method for cutting and reshaping an electrode tip in which the surface of a rotary holder or blade flank is roughened by blasting. Patent Literature 2 relates to a tip dressing cutter for cutting and reshaping a distal end of an electrode tip according to the preamble of appended claim 1.

### CITATION LIST

### PATENT LITERATURE

Patent Literature 1: U.S. Patent No. 6861609
Patent Literature 2: US 2021/046552 A1

### SUMMARY OF INVENTION

### TECHNICAL PROBLEM

For example, repeated spot-welding at a factory or other sites can gradually degrade the state of the tip end of an electrode tip. The tip end of the electrode tip is thus periodically cut and reshaped using a tip dresser.

However, forming a rough surface area at the tip end of an electrode tip with the method described in Patent Literature 1 to stabilize spot-welding of an aluminum part involves the processes described below. The tip end of the electrode tip is cut and reshaped using a tip dresser, the electrode tip is then detached from the shank of a welding gun, the tip end of the electrode tip then undergoes surface treatment by blasting, and the electrode tip with the tip end having the treated surface is attached again to the shank of the welding gun. The cutting and reshaping operation on the electrode tip is complicated and time-consuming.

When the state of the tip end of the electrode tip degrades with repeated spot-welding of the aluminum part, low-melting aluminum may be deposited at the tip end of the electrode tip. This may stop the operation of the facility. At a factory that performs repeated spot-welding of aluminum parts, for example, the facility may be operated with the process of cutting and reshaping of the tip end of the electrode tip performed in shorter cycles. To reduce the frequency of stopping the facility, the cycles in which the tip end of the electrode tip is cut and reshaped is to be extended.

In response to the above, one or more aspects of the present invention are directed to a method for cutting and reshaping an electrode tip that can stabilize welding independently of repeated spot-welding of an aluminum part at the cut and reshaped electrode tip, extend cycles in which the tip end of the electrode tip is cut and reshaped, and simply and efficiently cut and reshape the electrode tip.

### SOLUTION TO PROBLEM

One aspect of the present invention is directed to a method for cutting and reshaping an electrode tip used for spot-welding of aluminum parts. The method includes processes described below.

The method according to a first aspect of the present invention includes preparing a rotary holder having a receiving surface to receive a tip end of a spot-welding electrode tip and a cutting component having a cutting edge and a flank surface continuous with the cutting edge, treating at least one of the receiving surface or the flank surface by blasting to form a rough surface, attaching the cutting component to the rotary holder to have the cutting edge extending gradually farther from a rotation axis of the rotary holder, then attaching the rotary holder to a tip dresser, and receiving the tip end of the electrode tip by the receiving surface and the flank surface while rotating the rotary holder to cut and reshape the tip end of the electrode tip with the cutting edge.

A method for cutting and reshaping an electrode tip according to a second aspect of the present invention is the method according to the first aspect of the present invention in which the flank surface includes a rough surface formed by blasting, and an unrough surface extending in a strip between the rough surface and the cutting edge.

A method for cutting and reshaping an electrode tip according to a third aspect of the present invention is the method according to the first aspect or the second aspect of the present invention in which the rough surface on at least one of the receiving surface or the flank surface has a surface roughness Ra within a range of 5.3 to 6.5 µm.

### ADVANTAGEOUS EFFECTS

In the above aspect, to cut and reshape the tip end of the electrode tip, the rough surface formed by blasting rubs against the tip end of the electrode tip to form a rough surface area including many sharp protrusions at the tip end of the electrode tip. Thus, an oxide film that forms between the tip end of the electrode tip and an aluminum part during welding is easily broken by the protrusions. This allows stable, repeated spot-welding. The rough surface reduces the effects of the oxide film during welding and can prevent an excess rise in the temperature between the tip end of the electrode tip and the aluminum part, reduce aluminum deposition on the tip end of the electrode tip, and thus can extend the cycles of the cutting and reshaping operation performed on the tip end of the electrode tip. In the cutting and reshaping operation performed on the electrode tip, the rough surface of the cutting component or the rough surface of the rotary holder rubs against the tip end of the electrode tip immediately after the cutting edge cuts the tip end of the electrode tip. This forms the rough surface area including fine irregularities at the tip end. Thus, a degraded area at the tip end of the electrode tip is removed to form the rough surface area. The cutting and reshaping operation can be simply and efficiently performed on the electrode tip.

Optionally, the tip end of the electrode tip immediately after being cut with the cutting edge smoothly slides over the flank surface and thus can be cut neatly.

Optionally, the rough surface formed on the receiving surface or the rough surface formed on the flank surface has optimum irregularities. Thus, when spot-welding is performed using the tip end of the electrode tip having the rough surface area formed by the rough surface through the cutting and reshaping operation, the welding characteristics can be stabilized further.

### BRIEF DESCRIPTION OF THE DRAWINGS

FIG. 1 is an exploded perspective view of a tip dresser to which a cutter according to an embodiment not covered by the claims is attached.
FIG. 2 is a perspective view of the cutter of FIG. 1.
FIG. 3 is a cross-sectional view taken along line III-III in FIG. 2.
FIG. 4 is a perspective view of a cutting component having a surface treated by blasting.
FIG. 5 is a plan view of a rotary holder having a surface treated by blasting.
FIG. 6 is a cross-sectional view taken along line VI-VI in FIG. 4.
FIG. 7 is a table showing the examination results of welding conditions after an aluminum part is repeatedly spot-welded with an electrode tip that is cut and reshaped with a method according to an embodiment of the present invention and with electrode tips having the tip ends with their states changed with other methods.

### DETAILED DESCRIPTION

One or more embodiments of the present invention are described in detail below with reference to the drawings. Embodiments described below are basically mere examples.

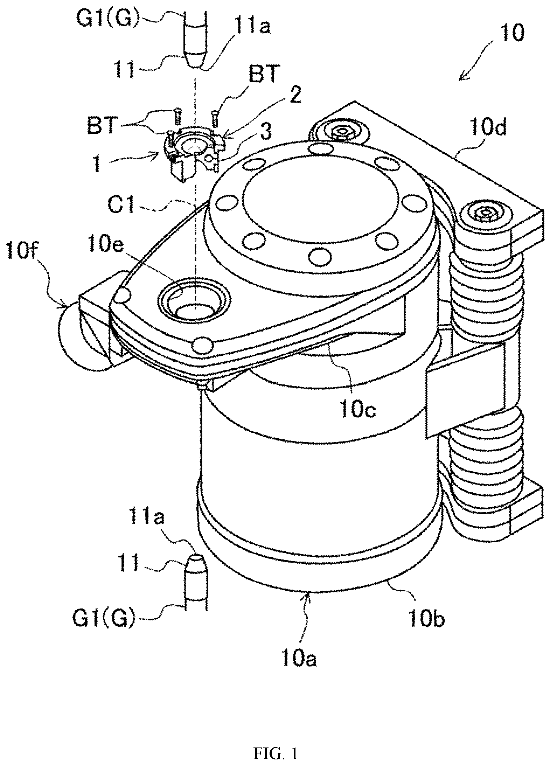

FIG. 1 is a diagram of a cutter 1 formed from metal and a tip dresser 10 to which the cutter 1 is attachable. The tip dresser 10 is used to cut tip ends 11a of a pair of electrode tips 11 facing each other and fitted to shanks G1 in spot-welding guns G. The tip dresser 10 includes a body case 10a having a substantially L shape in a side view.

The body case 10a includes a bottomed cylindrical motor housing 10b having a central axis extending vertically, and a cutter housing 10c extending laterally in substantially the horizontal direction from an upper portion of the motor housing 10b and having a substantially tear-drop shape in a plan view.

The motor housing 10b receives, on its side surface nearer the basal end of the cutter housing 10c, an impact absorber 10d attached to absorb an impact on the body case 10a.

The cutter housing 10c is a plate with a thickness. The cutter housing 10c has a cutter support hole 10e extending vertically through the center of its extension.

In a portion surrounding the cutter support hole 10e on the lower surface of the extension of the cutter housing 10c, a suction unit 10f is attached to suck and collect chips (not shown) generated during cutting of the tip ends 11a of the electrode tips 11.

The cutter 1 having a rotation axis C1 extending vertically is received in the cutter support hole 10e to be rotatable about the rotation axis C1 by a driving motor (not shown) accommodated in the motor housing 10b.

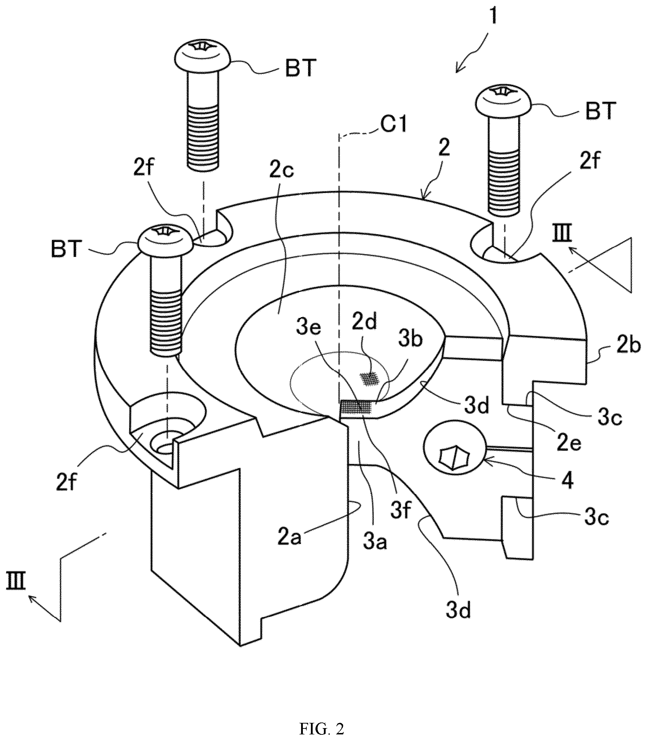

As shown in FIG. 2, the cutter 1 includes a rotary holder 2 having a substantially C shape in a plan view. The rotary holder 2 has a cutout 2a that is gradually wider in the circumferential direction about the rotation axis C1 as it extends outward in the radial direction from the rotation axis C1. The cutout 2a is open outward and is open vertically.

The rotary holder 2 has, at its upper end rim, a flange 2b protruding upward from the other portion and extending outward.

The flange 2b has three counterbores 2f open outward in the radial direction and open upward at predetermined intervals in the circumferential direction. The rotary holder 2 is fastened to the tip dresser 10 at these three counterbores 2f with bolts BT.

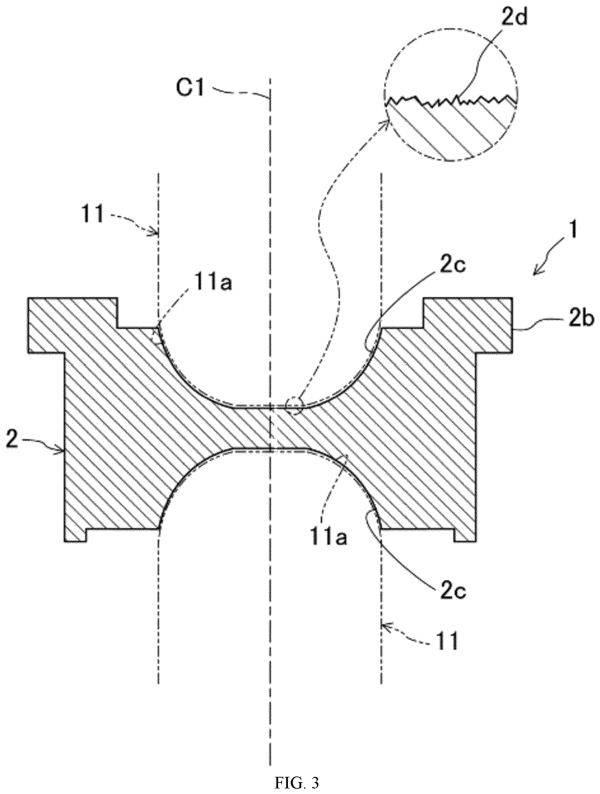

As shown in FIGs. 2 and 3, the rotary holder 2 has a pair of substantially hemispheric receiving surfaces 2c on the upper and lower surfaces. Each receiving surface 2c has a diameter gradually decreasing toward the center of the rotary holder 2. The receiving surfaces 2c are symmetric to each other in a direction along the rotation axis C1.

The receiving surfaces 2c each conform to the curve of the tip end 11a of the electrode tip 11 to receive the tip end 11a of the electrode tip 11 in a fitted manner with the center axis of the electrode tip 11 aligned with the rotation axis C1.

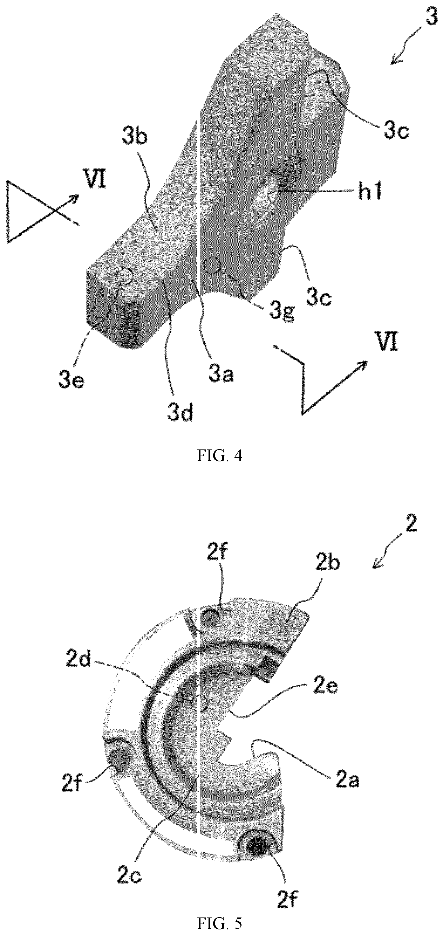

As shown in FIG. 5, the rotary holder 2 has, on its entire outer surface including the receiving surfaces 2c, a rough surface 2d treated by blasting (FIG. 2 shows the rough surface 2d simply in a portion of one receiving surface 2c for convenience).

The rough surface 2d is abraded at an air pressure of 0.7 MPa with an abrasive of 355 to 850 µm formed from a green silicon carbide.

One inner surface of the cutout 2a extending outward from the rotation axis C1 has an attachment step 2e recessed in a stepwise manner to be a substantially T shape in a side view.

A plate-like cutting component 3 formed from metal is attached to the attachment step 2e to cut the tip ends 11a of the electrode tips 11.

The cutting component 3 is a metal plate cut in a substantially T shape. As shown in FIGs. 2 and 4, the cutting component 3 is fastened to the attachment step 2e with a screw 4 through an attachment hole h1 at substantially its center.

When attached to the attachment step 2e, the cutting component 3 has one plate surface facing the bottom surface of the attachment step 2e, and the other plate surface including a cutting surface 3a. The cutting surface 3a extends to intersect with the circumferential direction about the rotation axis C1.

The cutting surface 3a has, on its upper and lower portions, a pair of flank surfaces 3b substantially perpendicular to the cutting surface 3a.

More specifically, the pair of flank surfaces 3b are spaced at a predetermined distance in the direction along the rotation axis C1 and are curved to be gradually spaced farther from each other along the rotation axis C1 as they extend farther from the rotation axis C1.

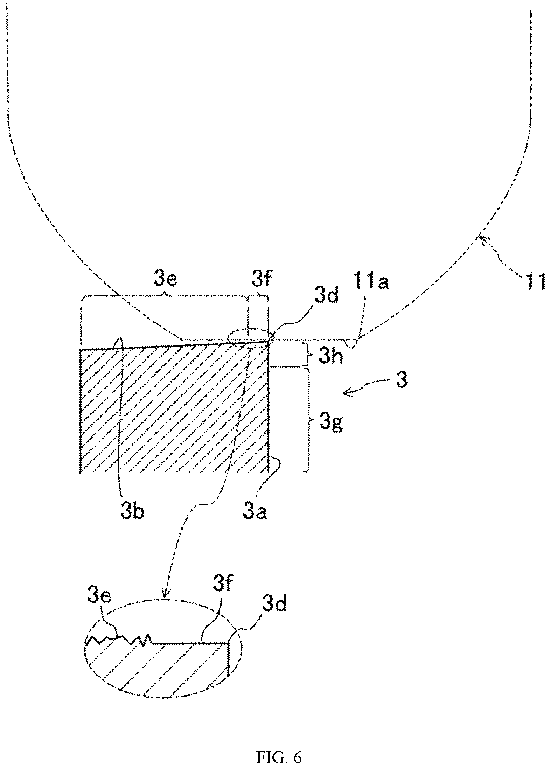

The flank surfaces 3b conform to the respective receiving surfaces 2c when the cutting component 3 is attached to the rotary holder 2. When one electrode tip 11 is moved closer to the flank surface 3b with its central axis aligned with the rotation axis C1, the flank surface 3b faces the tip end 11a of the electrode tip 11 as shown in FIG. 6.

As shown in FIGs. 2 and 4, the cutting component 3 has a pair of positioning recesses 3c that are rectangular in a side view in an upper portion and a lower portion farther from the rotation axis C1.

At intersections between the cutting surface 3a and the flank surfaces 3b, a pair of cutting edges 3d extend farther from the rotation axis C1 symmetric to each other along the rotation axis C1.

More specifically, one cutting edge 3d is formed at the intersection between the cutting surface 3a and one of the flank surfaces 3b, and the other cutting edge 3d is formed at the intersection between the cutting surface 3a and the other flank surface 3b.

As shown in FIGs. 2 and 6, each flank surface 3b has a rough surface 3e treated by blasting and an unrough surface 3f between the rough surface 3e and the cutting edge 3d. The unrough surface 3f extends in a strip along the cutting edge 3d (for convenience, FIG. 2 shows the rough surface 3e simply in a portion of one flank surface 3b).

The cutting surface 3a also has a rough surface 3g treated by blasting, and an unrough surface 3h between the rough surface 3g and the cutting edge 3d. The unrough surface 3h extends in a strip along the cutting edge 3d.

In other words, areas with no irregularities are left around the cutting edges 3d of the cutting component 3.

The unrough surfaces 3f and 3h each have a width of 0.8 mm, but may have another width of, for example, about 0.5 to 1.0 mm.

As shown in FIG. 4, the entire outer surface of the cutting component 3 is also treated by blasting, in addition to the cutting surface 3a and the flank surfaces 3b.

Similarly to the rotary holder 2, the rough surfaces 3e and 3g are abraded with an abrasive of 355 to 850 µm formed from a green silicon carbide at an air pressure of 0.7 MPa.

When the tip ends 11a of the electrode tips 11 having the center axes aligned with the rotation axis C1 are received by the flank surfaces 3b of the cutting component 3 and by the receiving surfaces 2c of the rotary holder 2 are driven to rotate, the cutting edges 3d of the cutting component 3 cut the tip ends 11a of the electrode tips 11, and the rough surfaces 2d of the receiving surfaces 2c and the rough surface 3e of the cutting component 3 form rough surface areas at the tip ends 11a of the electrode tips 11 to reshape the electrode tips 11.

A cutting and reshaping operation performed on the tip ends 11a of the electrode tips 11 using the tip dresser 10 will now be described in detail.

First, the outer surface of the cutter 1 is treated by blasting. More specifically, as shown in FIGs. 4 and 5, the entire outer surface of the cutting component 3 excluding portions around the cutting edges 3d is treated by blasting to form the rough surfaces 3e on the flank surfaces 3b of the cutting component 3. The entire outer surface of the rotary holder 2 including the receiving surfaces 2c is treated by blasting to form the rough surfaces 2d on the receiving surfaces 2c of the rotary holder 2.

After the cutting component 3 is attached to the rotary holder 2, the rotary holder 2 is attached to the tip dresser 10.

A pair of electrode tips 11 having the tip ends 11a in poor conditions are moved to above and below the cutter housing 10c of the tip dresser 10, and the center axes of the electrode tips 11 are aligned with the rotation axis C1.

A driving motor and a gear intermeshing unit in the tip dresser 10 (not shown) are then driven to rotate. This rotates the cutter 1 about the rotation axis C1.

The electrode tips 11 are then moved toward the receiving surfaces 2c of the rotary holder 2 along the rotation axis C1, and the receiving surfaces 2c receive the tip ends 11a of the electrode tips 11. As shown in FIG. 6, the cutting edge 3d of the cutting component 3 comes in contact with the tip end 11a of the corresponding electrode tip 11 to cut and reshape the tip end 11a. The rough surfaces 2d and 3e formed by blasting rub against the tip end 11a of the electrode tip 11 to form the rough surface area at the tip end 11a. In the cutting and reshaping operation performed on the electrode tip 11, the rough surface 2d of the rotary holder 2 or the rough surface 3e of the cutting component 3 rubs against the tip end 11a of the electrode tip 11 immediately after the cutting edge 3d cuts the tip end 11a of the electrode tip 11. This forms the rough surface area including fine irregularities at the tip end 11a.

The test results of the cutter 1 will now be described in detail.

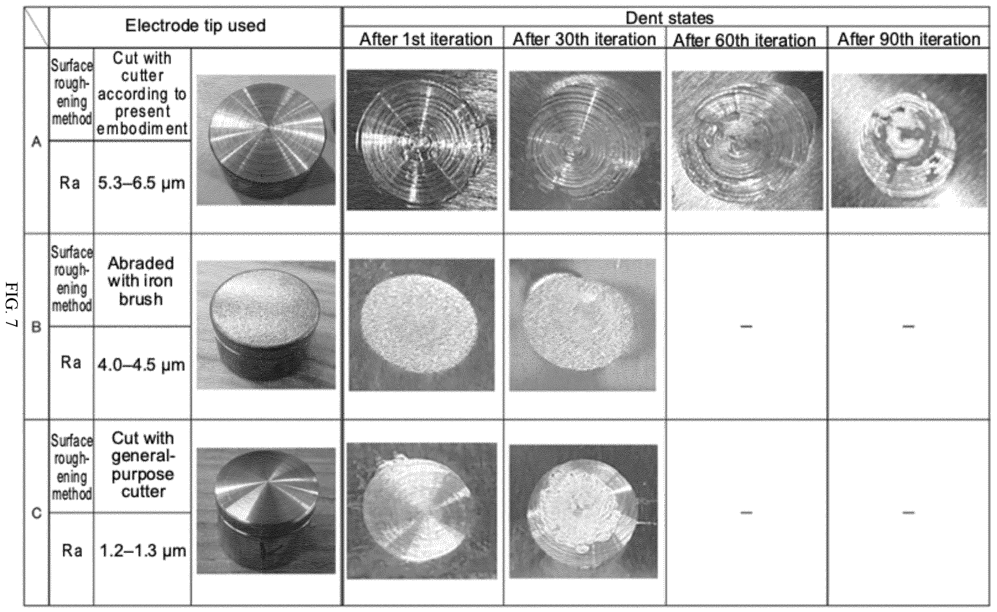

FIG. 7 is a table showing the weldability evaluation results after an aluminum part is repeatedly spot-welded with three electrode tips having the tip ends with different conditions. To determine whether the weldability of the electrode tips 11 cut and reshaped with the cutter 1 is improved, an electrode tip 11 cut and reshaped with the cutter 1 following the method according to the embodiment of the present invention (for test A), an electrode tip X having the tip end abraded with an iron brush (for test B), and an electrode tip Y having the tip end cut with a general-purpose tip dresser (for test C) were prepared for electrode tips for tests A, B and C. The characteristics of dents on the surfaces of a welding nugget and an aluminum part were examined.

Test pieces used in tests A to C have a plate thickness of 1.5 mm, and are formed from 6000 series aluminum. Spot-welding was repeatedly performed to form a lap joint under the conditions including a welding time of 80 ms, a current value of 32 kA, and a welding pressure of 460 kgf.

The rough surface area at the tip end of each of the electrode tips used in tests A to C are measured with a roughness measuring device. The rough surface area of the electrode tip 11 for test A has a surface roughness Ra of 5.3 to 6.5 µm, the rough surface area of the electrode tip X for test B has a surface roughness Ra of 4.0 to 4.5 µm, and the rough surface area of the electrode tip Y for test C has a surface roughness Ra of 1.2 to 1.3 µm.

In test B, in repeated spot-welding, burnt marks were formed at dents on the aluminum surface in the 30th iteration. Thereafter, three deposition phenomena occurred in iterations up to the 100th iteration. Up to the 100th iteration, no failures were observed in the welding nugget.

In test C, burnt marks were formed at dents on the aluminum surface in the sixth iteration. Thereafter, deposition phenomena occurred in the 13th iteration. Up to the 13th iteration, no failures were observed in the welding nugget.

In test A, deposition phenomena occurred in or after the 100th iteration. Up to the 160th iteration, no failures were observed in the welding nugget. Thus, spot-welding of an aluminum part with the electrode tip 11 cut and reshaped with the cutter 1 was determined to less likely to cause deposition phenomena after repeated welding.

To cut and reshape the tip ends 11a of the electrode tips 11, the rough surfaces 2d and 3e formed by blasting rub against the tip ends 11a of the electrode tips 11 to form the rough surface areas including many sharp protrusions at the tip ends 11a of the electrode tips 11. Thus, an oxide film that forms between the tip ends 11a of the electrode tips 11 and an aluminum part during welding is easily broken by the protrusions. This allows stable, repeated spot-welding.

The rough surfaces 2d and 3e reduce the effects of the oxide film during welding and can prevent an excess rise in the temperature between the tip ends 11a of the electrode tips 11 and the aluminum part, reduce aluminum deposition on the tip ends 11a of the electrode tips 11, and thus can extend the cycles of the cutting and reshaping operation performed on the tip ends 11a of the electrode tips 11.

In the cutting and reshaping operation performed on the electrode tips 11, the rough surface 2d of the rotary holder 2 and the rough surface 3e of the cutting component 3 rub against the tip ends 11a of the electrode tips 11 immediately after the cutting edges 3d cut the tip ends 11a of the electrode tips 11. This forms rough surface areas including fine irregularities at the tip ends 11a. Thus, degraded areas at the tip ends 11a of the electrode tips 11 are removed to form the rough surface areas. The cutting and reshaping operation can be simply and efficiently performed on the electrode tips 11.

Each flank surface 3b has the rough surface 3e formed by blasting and the unrough surface 3f extending in a strip between the rough surface 3e and the cutting edge 3d. Thus, the tip end 11a of the electrode tip 11 immediately after being cut with the cutting edge 3d smoothly slides over the flank surface 3b and thus can be cut neatly.

With the cutting and reshaping operation performed by the cutter 1, the rough surfaces 2d formed on the receiving surfaces 2c or the rough surfaces 3e formed on the flank surfaces 3b have optimum irregularities. Thus, when spot-welding is performed using the tip ends 11a of the electrode tips 11 having the rough surface areas formed by the rough surfaces 2d and 3e through the cutting and reshaping operation, the welding characteristics can be stabilized further.

In the embodiment of the present invention, the rough surface areas are formed at the tip ends 11a of the electrode tips 11 using both the rough surfaces 2d of the receiving surfaces 2c and the rough surfaces 3e of the flank surfaces 3b. In some embodiments, the rough surface areas may be formed at the tip ends 11a of the electrode tips 11 using either the rough surfaces 2d of the receiving surfaces 2c or the rough surfaces 3e of the flank surfaces 3b.

In the embodiment of the present invention, the entire outer surface of the rotary holder 2 is treated by blasting, and the entire outer surface of the cutting component 3 excluding portions around the cutting edges 3d is treated by blasting. In some embodiments, simply a portion of each receiving surface 2c of the rotary holder 2 or a portion of each flank surface 3b of the cutting component 3 may be treated by blasting.

In the embodiment of the present invention, an abrasive of 355 to 850 µm formed from a green silicon carbide is used for blasting. In some embodiments, another abrasive such as emery fine, brown alumina, or diamond powder may be used.

In the embodiment of the present invention, the cutting component 3 has the pair of cutting edges 3d. In some embodiments, the cutting component 3 may simply have one cutting edge 3d.

### INDUSTRIAL APPLICABILITY

One or more embodiments of the present invention are applicable to a method for cutting and reshaping the tip end of an electrode tip for aluminum welding.

### REFERENCE SIGNS LIST

- 1: cutter
- 2: rotary holder
- 2c: receiving surface
- 2d: rough surface
- 3: cutting component
- 3a: cutting surface
- 3b: flank surface
- 3d: cutting edge
- 3e: rough surface
- 3f: unrough surface

- 10: tip dresser
- 11: electrode tip
- 11a: tip end
- C1: rotation axis

## Claims

1. A method for cutting and reshaping an electrode tip, the method comprising:
preparing a rotary holder (2) and a cutting component (3), the rotary holder (2) having a receiving surface (2c) to receive a tip end (11a) of a spot-welding electrode tip (11) , the cutting component (3) having a cutting edge (3d) and a flank surface (3b) continuous with the cutting edge (3d);
**characterized in that** it further comprises:
treating at least one of the receiving surface (2c) or the flank surface (3b) by blasting to form a rough surface (3e), attaching the cutting component (3) to the rotary holder (2) to have the cutting edge (3d) extending gradually farther from a rotation axis (C1) of the rotary holder (2), and then attaching the rotary holder (2) to a tip dresser (10); and
receiving the tip end (11a) of the electrode tip (11) by the receiving surface (2c) and the flank surface (3b) while rotating the rotary holder (2) to cut and reshape the tip end (11a) of the electrode tip (11) with the cutting edge (3d).

2. The method according to claim 1, wherein
the flank surface (3b) includes
a rough surface (3e) formed by blasting, and
an unrough surface (3f) extending in a strip between the rough surface (3e) and the cutting edge (3d).

3. The method according to claim 1 or claim 2, wherein
the rough surface (3e) on at least one of the receiving surface (2c) or the flank surface (3b) has a surface roughness Ra within a range of 5.3 to 6.5 µm.

## Patentansprüche

1. Verfahren zum Schneiden und Umformen einer Elektrodenspitze, wobei das Verfahren umfasst:
Vorbereiten eines Drehhalters (2) und eines Schneidbestandteils (3), wobei der Drehhalter (2) eine Aufnahmefläche (2c) zum Aufnehmen eines Spitzenendes (11a) einer Punktschweißen-Elektrodenspitze (11) hat, wobei der Schneidbestandteil (3) eine Schneidkante (3d) und eine Flankenfläche (3b) hat, die mit der Schneidkante (3d) durchgehend ist;
**dadurch gekennzeichnet, dass** es ferner umfasst:
Behandeln zumindest einer von der Aufnahmefläche (2c) oder der Flankenfläche (3b) durch Strahlen, um eine raue Fläche (3e) zu bilden, Anbringen des Schneidbestandteils (3) am Drehhalter (2), um zu bewirken, dass die Schneidkante (3d) sich allmählich weiter von einer Drehachse (C1) des Drehhalters (2) erstreckt, und dann Anbringen des Drehhalters (2) an einem Spitzenabrichtwerkzeug (10); und
Aufnehmen des Spitzenendes (11a) der Elektrodenspitze (11) durch die Aufnahmefläche (2c) und die Flankenfläche (3b), während der Drehhalter (2) gedreht wird, um das Spitzenende (11a) der Elektrodenspitze (11) mit der Schneidkante (3d) zu schneiden und umzuformen.

2. Verfahren nach Anspruch 1, worin
die Flankenfläche (3b)
eine raue Fläche (3e), die durch Strahlen gebildet wird, und
eine nicht raue Fläche (3f), die sich in einem Streifen zwischen der rauen Fläche (3e) und der Schneidkante (3d) erstreckt, umfasst.

3. Verfahren nach Anspruch 1 oder Anspruch 2, worin
die raue Fläche (3e) an zumindest einer von der Aufnahmefläche (2c) oder der Flankenfläche (3b) eine Oberflächenrauheit Ra innerhalb eines Bereichs von 5.3 bis 6.5 µm hat.

## Revendications

1. Procédé de coupe et de redéfinition d'une pointe d'électrode, le procédé comprenant :
la préparation d'un support rotatif (2) et d'un composant de coupe (3), le support rotatif (2) présentant une surface de réception (2c) pour recevoir une extrémité de pointe (11a) d'une pointe d'électrode de soudage par points (11), le composant de coupe (3) présentant un bord de coupe (3d) et une surface de flanc (3b) continue avec le bord de coupe (3d) ;
**caractérisé en ce qu'**il comprend en outre :
le traitement d'au moins l'une de la surface de réception (2c) ou de la surface de flanc (3b) par projection de particules pour former une surface rugueuse (3e), la fixation du composant de coupe (3) au support rotatif (2) pour que le bord de coupe (3d) s'étende progressivement plus loin d'un axe de rotation (C1) du support rotatif (2), puis la fixation du support rotatif (2) à un dresseur de pointe (10) ; et
la réception de l'extrémité de pointe (11a) de la pointe d'électrode (11) par la surface de réception (2c) et la surface de flanc (3b) tout en faisant tourner le support rotatif (2) pour couper et redéfinir l'extrémité de pointe (11a) de la pointe d'électrode (11) avec le bord coupant (3d).

2. Procédé selon la revendication 1, dans lequel
la surface de flanc (3b) inclut
une surface rugueuse (3e) formée par projection de particules, et
une surface non rugueuse (3f) s'étendant en bande entre la surface rugueuse (3e) et le bord tranchant (3d).

3. Procédé selon la revendication 1 ou 2, dans lequel
la surface rugueuse (3e) sur au moins l'une de la surface de réception (2c) ou de la surface de flanc (3b) présente une rugosité de surface Ra comprise dans une plage de 5.3 à 6.5 µm.
